# EUROPEAN PATENT SPECIFICATION

(11) **EP 3 864 964 B1**
(45) Date of publication and mention of the grant of the patent: **01.05.2024**
(21) Application number: 20382091.5
(22) Date of filing: 11.02.2020
(51) Int. Cl.: A01N 59/02, A01N 25/08, A01N 25/18, A01N 25/34, A01P 1/00, A01P 3/00, A61L 2/20, A61L 2/22, A23B 4/048, A23L 3/3409, A01M 13/00

(54) **BIOCIDE SMOKE COMPOSITION, SMOKE POT CONTAINING IT AND ITS USE FOR DISINFECTING ENVIRONMENTS**
BIOZIDE RAUCHZUSAMMENSETZUNG, RAUCHTOPF ENTHALTEND ES UND DEREN VERWENDUNG ZUR DESINFEKTION VON UMGEBUNGEN
COMPOSITION DE FUMÉE BIOCIDE, FUMOIR LA CONTENANT, ET SON UTILISATION DANS DÉSINFECTION D'ENVIRONNEMENTS

(43) Date of publication of application: 18.08.2021
(73) Proprietor: Biocidas Biodegradables Zix, S.L., 22004 Huesca (ES)
(72) Inventor: SANAGUSTÍN CORVINOS, Fernando, 22004 HUESCA (ES); CINTORA ESCALANTE, Carlos, 22004 HUESCA (ES)
(74) Representative: Schäfer, Matthias W.

(56) References cited:
- CN-A- 104 719 296
- US-A1- 2012 074 014
- US-A1- 2018 220 664

## Description

### Field of the invention

The invention is comprised in the field of chemical products intended for the field of agriculture, stock farming, food and the environmental area, and it is more specifically encompassed in the field of broad spectrum biocide products with bactericidal, virucidal and fungicidal efficacy.

The present invention specifically relates to a smoke product (that is, presented or applied in the form of smoke), the active substance, monopersulfate, of which is used for the first time in the field of the smoke products for disinfecting in the area of stock farming, agriculture, the environment and food. More specifically, the specific scope of application of the invention includes: use on farms and stock farms with all animal species (pigs, chickens, ducks, turkeys, partridges, sheep, calves, dairy cows, etc.), brooder houses, hatcheries, storage units and closed containers, feed silos, feed storage, disinfection of fruits and vegetables, as well as transport vehicles or surfaces that cannot be treated with corrosive products, abrasive products, or products in liquid form.

### State of the art of the invention

At present, there are known disinfectant products and substances and other products having diverse biocidal activity of a larger or smaller activity spectrum (fungicides, bactericides) applicable both for the treatment of empty premises intended for livestock production (incubators, hatcheries, stables, warehouses, trucks, freight cars, etc.) and in the direct treatment of environments or areas where post-harvest or post-collection food products are stored.

The main problem with using these products is that the application thereof has been up until now mainly in liquid format, although a product can occasionally also be found in powder form; in both cases, dilution in water and subsequent application on the surface to be treated is necessary, allowing them to act for several minutes by contact thereon. These products present a risk in handling and in being applied correctly, so their use is restricted to trained personnel. There is furthermore a risk of spillage, seepage and leakage in their storage and transport and the generation of waste water after use. In addition to the risks in handling, these products have certain limitations since, in order to be effective, they need to be in direct contact with the surface to be treated, which hinders cleaning elements and environments such as cages or machinery, and they do not always reach all the areas object of disinfection. Additionally, the residue they leave behind due to direct contact also requires greater control and inspection of the surfaces treated with these products.

These drawbacks are present with monopersulfate, an active substance used as a disinfectant due to its biocidal action, with bactericidal, virucidal and fungicidal efficacy. It is usually found in the form of a granulated powder and is used, after being diluted, for the disinfection of aqueous mean such as pools, as they are less aggressive than treating water with chlorine. In another format, the company Biocidas Biodegradables Zix uses this active agent in its product VIROX^{®} combined with other stabilising elements, to obtain a highly stable, biodegradable, sterilising solid disinfectant, which is in powder format and applied diluted in water by spraying or misting. There are other products on the market incorporating monopersulfate as an active agent with a composition similar to that of VIROX^{®}, but they are all sold in powder format and require being diluted in water for applying same, with the subsequent aforementioned limitations.

However, up until now no biocidal product with broad spectrum monopersulfate has been created anywhere worldwide that can be applied in another format that is not in powder form for dilution. Smoke technology would be among these possible techniques to investigate.

The working of smoke compositions is based on the physical principle of sublimation, where, by means of applying heat of combustion without a flame to the product in question, the active agents to be applied transition from solid to gas state, and these agents, in the form of fine particles, are entrained by the smoke. Therefore, this technology uses the atmosphere, the air from an environment or enclosure, as a dispersion carrier for the active agent, with its range being much greater than other formats.

Smoke technology was widely developed at the beginning of the last century due to its potential in a number of applications (entertainment and toys, shows in the theatre and cinema, advertising and disinfection; see patent US 2,324,359, from 1943). With regard to its application in the field of disinfection, one of the first patents in Spain dates back to 1954, with patent number 214,623, which was developed in and has been exploited by Fumi-Hogar, S.L. from 1967 to the present. Since then, there have been various advances made in the field.

For some time now, the application of this smoke technology in insecticide products has been known, and it has proven to be a known, easy-to-use and reliable method. Thus, European patent EP1546067 describes a smoke composition comprising one or more active substances that are biocidal or phytopharmaceutical active substances (for example, bifenthrin, an insecticide from the pyrethroid group) in an improved smoke base, which constitutes a technological innovation against other similar smoke compositions.

This same technology has also been applied with fungicides, as in the case of Spanish patent ES2135340, which discloses a smoke product indicated for disinfecting the environment of closed-off enclosures, empty enclosures, or enclosures containing stored fruits or vegetables, as well as the method of obtaining said fungicide product, based on imazalil, methyl-thiophanate and ortho-phenylphenol (O-phenylphenol or OPP). Other smoke products with fungicidal action currently being sold are Deccopyr Pot^{®}, with pyrimethanil, or Deccofenato Pot^{®}, also based on ortho-phenylphenol, both by DECCO Ibérica; and Sanivir^{®}, a smoke generator likewise based on ortho-phenylphenol and glutaraldehyde.

Likewise, there are broader spectrum active agents, such as, for example, PHMB, with bactericidal, fungicidal and virucidal action, which have also been formulated in smoke products, such as Vantocil^{®} in FumiFull Smoke Disinfectant by Fumi-Hogar, S.L.

As a general rule, smoke compositions are usually found on the market in solid form, in multiple manners and formats, depending on their use: in the form of a tablet, even a candle, or in smoke pots or canisters. These smoke canisters usually contain:
- the active disinfectant material,
- an inert matrix, formed by a porous product that does not take part in combustion,
- a combustible product,
- an upper air chamber, for supplying the oxygen needed for combustion, and
- a wick intended for being ignited, from outside same, protruding from the canister.

In these cases, the ignition of the combustible begins after the wick is set on fire. The gaseous products from combustion create internal pressure in the canister, from which said products are projected through a central opening of the lid, entraining the active material contained in the mixture, which is dispersed in the smoke that is formed and expanded with same, reaching all the nooks and crannies of the enclosure and thus covering the entire volume of the facility to be disinfected.

This dispersion technique is potentially very effective as it guarantees maximum safety and homogeneity of the application, since the autonomous operation of the smoke canister means that the operator is not exposed to the disinfectant used, while at the same time guaranteeing that the active ingredient application dose is distributed with maximum homogeneity over all the surfaces susceptible to exposure, reaching all the nooks and crannies, which was not possible with conventional systems for applying the product in liquid or dilutable powder format. US 2012/074014 A1 discloses a known spray container, but it does not include the smoke composition of the present invention. The applications US 2018/220664 A1 and CN 104719296 A disclose known smoke generating compositions, but without monopersulfate as active ingredient.

While there are already smoke products in multiple forms and for widely varying uses on the market, the invention in this chemical sector of disinfecting environments is justified because never before has one been formulated with monopersulfate as the active substance, intended for this disinfecting use in the agricultural, stock farming, environmental and food sectors. This is the first time a broad spectrum smoke product based on monopersulfate is achieved with bactericidal, virucidal and fungicidal efficacy.

### Description of the invention

The object of the present invention, therefore, is to provide a smoke composition with broad spectrum biocidal activity, based on monopersulfate, as well as a pot containing same, which is a smoke canister for applying this disinfectant product in environments and areas of the surroundings in stock farming, agriculture and food sectors, and having bactericidal, virucidal and fungicidal efficacy, which solves the mentioned drawbacks of the prior art. The smoke product described in this invention has not been used up until now in the stock farming and agri-food field, and it shows high biodegradability compared to other active substances normally used in the technical field.

Taking into account the foregoing, there has been obtained a combination of monopersulfate, organic acids and stabilisers with bactericidal, fungicidal and virucidal action, in smoke format, the composition of which is the following:
- an active ingredient, being monopersulfate, in an amount by weight comprised between 10% and 30% of the total weight of the smoke composition, with said active ingredient being included in
- a powder matrix comprising one or more stabilisers and excipients selected from the group made up of: sulfamic acid, sodium dodecylbenzenesulfonate, sodium chloride and any combination thereof; wherein the active ingredient represents between 40 % and 60 % of the total powder matrix and active ingredient mixture, and wherein said mixture represents between 20 % and 50 % of the total weight of the smoke composition;
- an inert matrix, made up of one or more phyllosilicates, in a proportion by weight comprised between 25 % and 50 % with respect to the total weight of the smoke composition, the at least one phyllosilicate being selected from the group consisting of: sepiolite, vermiculite, talc, attapulgite, biotite, moscovite, lepidolite, margarite, glauconite, chlorite and any combination thereof;
- a combustible material, being at least one polysaccharide, in a proportion by weight between 5 % and 25 % with respect to the total weight of the smoke composition; the inclusion of this polysaccharide as a combustible material allows it, once combustion by heat has started, to be homogeneously transmitted to the mixture;
- an oxidising material, being potassium chlorate, in a proportion by weight between 5 % and 20 % with respect to the total weight of the smoke composition; this supplies oxygen for ignition to start and subsequently continue; and
- colophony, being a component for improving smoke density, in an amount comprised between 1 % and 25% of the total weight of the smoke composition.

Interest in the present composition is based on the use of monopersulfate as an active substance, given its bactericidal, virucidal and fungicidal efficacy, and it is authorised by the Ministry of Agriculture for its use for biocidal treatments.

The monopersulfate of the smoke composition can be selected from the group consisting of sodium monopersulfate, potassium monopersulfate or a mixture of both.

The inclusion of the polysaccharide as a combustible material allows, once the combustion by the heat supplied by the ignition or lighting means, such as a wick, has started, said polysaccharide to be homogeneously transmitted to the mixture of the smoke composition. Furthermore, the potassium chlorate acts as an oxidising product, supplying oxygen for ignition to start and subsequently continue. Therefore, this composition allows not having to include an upper air chamber inside said canister, something that does not happen in other smoke canisters of the prior art.

Preferably, the active ingredient and powder matrix mixture is present in the smoke composition in an amount of 40 % of the total weight of the smoke composition, the amount of monopersulfate thus being 21.5 % by weight of the total smoke composition (or, in other words, the amount of monopersulfate being 53.5 % of the total of the mixture formed by the active ingredient and the powder matrix).

Also preferably, the inert matrix of the at least one phyllosilicate is present in a proportion by weight of 25-30 % of the total weight of the smoke composition, more preferably being 28 %, and said phyllosilicate preferably being talc. Furthermore, the polysaccharide is present in a proportion by weight of 10 %-25 %, and more preferably 10-15 % of the total weight of the smoke composition, even more preferably being 11 %, and also preferably being sucrose (sugar). In turn, preferably the potassium chlorate is present in a proportion by weight of 5 %-20 %, more preferably 10-15 % of the total weight of the smoke composition, even more preferably being 11 %. Preferably, the amount of colophony is comprised between 5% and 15%, even more preferably being 10 % of the total weight of the smoke composition.

In a preferred embodiment, the powder matrix containing the active ingredient has the following formulation:
- monopersulfate, in a percentage of 53.3 % by weight of the total weight of the powder matrix and active ingredient mixture (which is equivalent to a monopersulfate weight of 21.5 % of the total weight of the smoke composition);

- sulfamic acid at 1 % by weight of the total weight of the powder matrix;
- sodium dodecylbenzenesulfonate, at 0.8 % by weight of the total weight of the powder matrix; and
- sodium chloride q.s. 100 %.

One of the most important preferred embodiments of the present invention consists of a smoke composition with the following formulation:
- the active ingredient and powder matrix mixture in an amount of 40 % of the total weight of the smoke composition, the amount of monopersulfate thus being 21.4 % by weight of the total smoke composition (or, in other words, the amount of monopersulfate being 53.5 % of the total of the mixture formed by the active ingredient and the powder matrix); where said powder matrix also comprises:
   ∘ sulfamic acid at 1 % by weight of the total weight of the powder matrix;
   ∘ sodium dodecylbenzenesulfonate, at 0.8 % by weight of the total weight of the powder matrix; and
   ∘ sodium chloride q.s. 100 %;
- the inert matrix of the phyllosilicate in a proportion by weight of 28 % of the total weight of the smoke composition, said phyllosilicate being talc;
- the polysaccharide, being sugar, in a proportion by weight of 11 % of the total weight of the smoke composition;
- the potassium chlorate in a proportion by weight of 11 % of the total weight of the smoke composition; and
- colophony, in an amount of 10 % by weight of the total weight of the composition.

The preparation of the smoke composition is based on a simple dry mixing of the components, where first a pre-conditioning of the raw materials to be used is performed, to adjust its grain size distribution. Subsequently, the components of the powder matrix are mixed with the active agent and, after this mixing, they are mixed with the inert matrix of the at least one phyllosilicate. Next, the rest of the components described are gradually added in an order that prevents reactivity of the mixture during manufacture.

Another object of the present invention consists of the device containing said smoke composition for its application, being a smoke canister consisting of a pot with a lid, which has an opening configured for letting out the smoke produced therein, where there are housed the smoke composition and ignition or lighting means, such as a wick, which, once lit, cause the combustion of the composition inside the pot and generates smoke in which small particles of the active agent expand. The size (dose) of the pot is variable and depends on the size of the facility to be disinfected, where it may be appropriate to use several smoke canisters for applying products for disinfecting surfaces and areas in the surroundings of stock farming.

Preferably, the igniting means of the smoke canister comprise a wick protruding through the upper part of the containing pot and going through the interior to the bottom of same. Therefore, it is possible to light the smoke canister by setting fire to the wick along its upper edge, protruding from the containing pot, or where preferred, if the wick goes through the entire interior of the pot to the bottom of same, it can be lit along the lower edge thereof, causing an external heating in the lower part of said pot using a pyrotechnic component, also housed at the bottom of the pot and in contact with the lower end of the wick, which acts as a source of energy; a particular case of this embodiment would be, for example, a wick combined with a shoe, with the shoe being a component that increases the heating capacity of the wick without generating a flame and guaranteeing the start of the smoke reaction.

In a more preferred embodiment, the smoke canister dispenses with (that is, neither contains nor has) an upper air chamber, because it is not necessary for ignition, unlike the smoke canisters known in the prior art.

A third object of the present invention relates to the non-therapeutic use or application of the smoke composition defined in the present specification as a disinfecting agent. Preferably, it is applied in disinfecting the surroundings, environments and surfaces in the field of stock farming, agriculture, food and in the environmental area. Said use likewise entails a method of disinfecting an environment, surroundings or surface by means of one or more smoke canisters based on monopersulfate such as that described in the present specification, said method comprising lighting the igniting means of the smoke canister or canisters, said means being a wick, for example, to cause the internal combustion of the composition and release the active agent as part of the smoke generated. Said wick can be lit with a simple lighter along its upper edge, protruding from the containing pot of the canister. In the preferred case in which the wick goes through the entire interior of the pot to the bottom of same, it can be lit as follows: cause an external heating of the lower part of the pot and thus light the wick in the interior using a pyrotechnic component acting as a source of energy in said bottom of the pot; this mechanism can be, for example, a wick combined with a shoe, a component of the ignition system that increases the heating capacity of the wick without generating a flame and guaranteeing the start of the smoke reaction. This system, when lit, allows reaching temperatures greater than 200 °C and the ignition of the smoke canisters in 30 seconds.

With respect to the use or application of the smoke composition in the aforementioned technical sectors, it should be pointed out that, preferably, the effective dose thereof is comprised between 1-3 g/m³, including both limits, according to French standards AFNOR, which are stricter than UNE standards usually considered as a reference. More preferably, when used as a bactericide, the effective dose is 2 g/m³, whereas when used as a fungicide, the dose is 3 g/m³. To act as a virucide, the dose does not need to reach 2 g/m³.

The described smoke composition and the smoke canister containing thereof solve the problems set forth above and provide the following advantages:
- proven fungicidal, bactericidal and virucidal efficacy of the active compound, monopersulfate, which is not altered when formulated and applied as a smoke generator;
- the product presents greater biodegradability than other conventional active materials from the family of aldehydes (glutaraldehydes) or phenols (ortho-phenylphenol);
- an easy-to-apply product, since it does not have to be diluted;
- a fast-acting product;
- a safe product: with the composition being in a smoke canister format, it allows for gradual ignition, such that contact between operators and product is prevented, eliminating a risk factor of the application;
- it disinfects materials and surfaces such as cages, machinery or electrical material by means of dry smoke, wherein, with other known products the active material of which is monopersulfate in powder or diluted form, direct application of the active disinfecting agent was not possible; additionally
- it disinfects hard-to-reach areas; disinfection by means of dry smoke furthermore prevents adding moisture to the area in which the product is applied; which entails
- eliminating salmonella suspended in the area (surfaces, powder, etc.).
- unlike liquid biocides, which require a ULV (Ultra Low Volume) mister for disinfecting surfaces and areas, this smoke format does not require making any investment in machinery for its use;
- it can be safely transported anywhere in the world, eliminating the risks of spillage and corrosion that liquid biocides present.

Additionally, the ignition system allows applying the mixture in a manner that is safe for the person applying it, since the wick generates a delay in the ignition of the canister and the emission of the smoke generator, which allows the person applying it to not come into contact with the smoke that is produced after ignition. Therefore, the product can be applied without any people around, thus eliminating the risks in handling disinfectants in powder and liquid forms presented.

### Figures

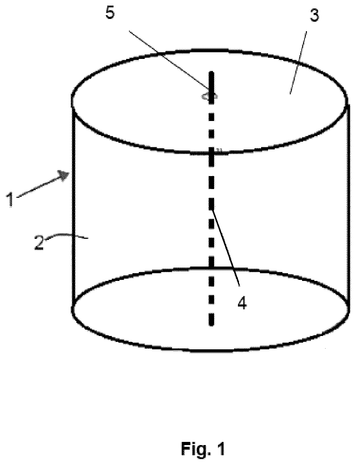

Figure 1: shows a schematic representation of a smoke canister according to the invention for applying disinfecting products on surfaces and areas in the surroundings of stock farming and food. The smoke canister (1) consists, in its most essential form, of a pot (2) with a lid (3) containing the disinfectant product therein, where there are also placed igniting means consisting of a wick (4) coming out of the upper part of the pot (2) through an opening (5) of the lid (3), to enable being lit with a flame. In this embodiment, the wick (4) is long enough to go through the entire interior of the pot (2), from its upper part to the bottom.

### Examples

### Example 1: Determination of airborne disinfecting efficacy of the biocide smoke composition of the present invention. Bactericidal and fungicidal activity.

At least two studies on airborne disinfection in the veterinary sector by means of the smoke composition of the present invention were carried out in 2018, verifying its bactericidal and fungicidal activity according to Standard AFNOR NF T 72-281:2014.

To this end, both studies used a smoke composition with potassium monopersulfate at 21.4 %, in a closed and thermally insulated rectangular chamber measuring 74 m³, where 3 smoke canisters with the composition object of study were placed.

The smoke composition presented the following formulation:
- the active ingredient and powder matrix mixture in an amount of 40 % of the total weight of the smoke composition, the amount of monopersulfate thus being 21.4 % by weight of the total smoke composition (or, in other words, the amount of monopersulfate being 53.5 % of the total of the mixture formed by the active ingredient and the powder matrix); where said powder matrix also comprises:
   ∘ sulfamic acid at 1 % by weight of the total weight of the powder matrix;
   ∘ sodium dodecylbenzenesulfonate, at 0.8 % by weight of the total weight of the powder matrix; and
   ∘ sodium chloride q.s. 100 %;
- the inert matrix of the phyllosilicate in a proportion by weight of 28 % of the total weight of the smoke composition, said phyllosilicate being talc;
- the polysaccharide, being sugar, in a proportion by weight of 11 % of the total weight of the smoke composition;
- the potassium chlorate in a proportion by weight of 11 % of the total weight of the smoke composition; and
- colophony, in an amount of 10 % by weight of the total weight of the composition.

The treatment lasted for 8 hours. In the first of the studies for verifying bactericidal activity, the total amount used was 3 canisters at 21.4 % of potassium monopersulfate per microorganism, whereas in the second study for verifying fungicidal activity, 4 canisters at 21.4 % of potassium monopersulfate per microorganism were used.

### Study 1: bactericidal activity study

The strains used were:
- *Pseudomonas aeruginosa* CECT-116
- *Escherichia coli* CECT-405
- *Enterococcus hirae* CECT-4081
- *Staphylococcus aureus* CECT-239

Table 1 below shows the results of the total organism count in the test carried out:

**Table 1**

| **Bacteria strains** | **n'₁ + n'₂** | **log (n'₁ + n'₂)** |
|---|---|---|
| *Pseudomonas aeruginosa* CECT-116 | 2.68 | 0.43 |
| *Pseudomonas aeruginosa* CECT-116 (with a high inoculum 5×10⁹) | 4.22 | 0.63 |
| *Escherichia coli* CECT-405 | 4.60 | 0.66 |
| *Enterococcus hirae* CECT-4081 | 3.45 | 0.54 |
| *Staphylococcus aureus* CECT-239 | 3.07 | 0.49 |

| | | |
|---|---|---|
| *n'₁: mean of 3 n₁; n'₂: mean of 3n'₂.* *n₁: Bacteria counts in the validation of the residual effect on agar in pouring.* *n₂: Bacteria counts in the validation of the residual effect on a filtration membrane in filtration seeding.* | | |

Table 2 below shows the results of the evaluation of the fungicidal activity in the test:

**Table 2**

| **Bacteria strains** | **"N" Titration of the initial suspension** | **Preliminary test** | | | **"T" controls** | **Test: log* reductions "d"*** |
|---|---|---|---|---|---|---|
| | | **n₁/N₁** | **n₂/N₂** | **n₃/N₁** | | |
| | **Bacteria 1×10⁸ to 5×10⁹/ml** | **n₁>0.5N₁** | **n₂>0.5N₂** | **n₃>0.5N₁** | **T>10⁶** | |
| *Pseudomonas aeruginosa* CECT-116 | 2.70×10⁸ | 1.07 | 1.19 | 0.96 | 1.36 × 10⁶ | d1 5.70 |
| *Pseudomonas aeruginosa* CECT-116 (with a high inoculum 5×10⁹) | 5.20 × 10⁹ | 1.09 | 0.93 | 1.07 | 1.55 × 10⁷ | d1 6.56 |
| *Escherichia coli* CECT-405 | 3.15 × 10⁸ | 1.13 | 1.08 | 1.22 | 1.92 × 10⁶ | d3 5.62 |
| *Enterococcus hirae* CECT-4081 | 3.25 × 10⁸ | 1.01 | 1.10 | 1.03 | 1.62 × 10⁶ | d4 5.67 |
| *Staphylococcus aureus* CECT-239 | 3.0 × 10⁸ | 1.29 | 1.20 | 1.45 | 1.62 × 10⁶ | d2 5.72 |

| | | | | | | |
|---|---|---|---|---|---|---|
| *N₁, N₂, n₁*, n₂*, n₃*: mean counts of the selected dilution* *T: Control of microorganism survival* **: Criteria for evaluating the bactericidal activity for the product to be active: d > 5.* *N₁: Bacteria counts in pouring* *N₂: Bacteria counts in filtration seeding* *n₁: Bacteria counts in the validation of the residual effect on agar in pouring* *n₂: Bacteria counts in the validation of the residual effect on a filtration membrane in filtration seeding* *n₃: Bacteria counts in the validation of the residual effect of the support in pouring* *For validation of the method, a comparison has been made of the counts between the results of: n₁ with N₁; n₂ with N2; n₃ with N₁.* | | | | | | |

### Study 2: study of the fungicidal activity

The strains used were:
- *Candida albicans* CECT-1394
- *Aspergillus brasiliensis* CECT-2574

Table 3 below shows the results of the total organism count in the test carried out:

**Table 3**

| **Fungus strains** | **n'₁ + n'₂** | **log (n'₁ + n'₂)** |
|---|---|---|
| *Candida albicans* CECT-1394 | 0 | 0 |
| *Aspergillus brasiliensis* CECT-2574 | 12 | 1.08 |

| | | |
|---|---|---|
| *n'₁: mean of 3 n₁; n'₂: mean of 3n'₂.* *n₁: Counts of Candida albicans*/ *Aspergillus brasiliensis in the validation of the residual effect on agar in pouring.* *n₂: Counts of Candida albicans*/ *Aspergillus brasiliensis in the validation of the residual effect on a filtration membrane in filtration seeding.* | | |

Table 4 below shows the results of the evaluation of the bactericidal activity in the test:

**Table 4**

| **Fungus strains** | **"N" Titration of the initial suspension** | **Preliminary test** | | | **"T" controls** | **Test: log* reductions "d"*** |
|---|---|---|---|---|---|---|
| | | **n₁/N₁** | **n₂/N₂** | **n₃/N₁** | | |
| | **C.albicans 2×10⁷ to 1×10⁸ CFU/ml; A.brasiliensis 5×10⁶ to 1×10⁷ CFU/ml** | **n₁>0.5N₁** | **n₂>0.5N₂** | **n₃>0.5N₁** | **T>10⁵** | |
| *Candida albicans* CECT-1394 | 4.5 × 10⁷ | 0.91 | 0.97 | 0.82 | 1.08 × 10⁵ | D6 5.03 |
| *Aspergillus brasiliensis* CECT-2574 | 9.2 × 10⁶ | 0.92 | 0.82 | 0.84 | 6.10 × 10⁵ | D7 4.70 |

| | | | | | | |
|---|---|---|---|---|---|---|
| *N₁, N₂, n₁*, n₂*, n₃*: mean counts of the selected dilution.* *For Candida albicans 10⁻⁶ and for Aspergillus brasiliensis 10⁻⁵* *T: Control of microorganism survival* **: Criterion for evaluating the fungicidal activity for the product to be active: d6≥4 and d7≥4* *N₁: Counts of Candida albicans*/ *Aspergillus brasiliensis in pouring* *N₂: Counts of Candida albicans*/ *Aspergillus brasiliensis in filtration seeding* *n₁: Counts of Candida albicans*/ *Aspergillus brasiliensis in the validation of the residual effect on agar in pouring* *n₂: Count of Candida albicans*/*Aspergillus brasiliensis in the validation of the residual effect on a filtration membrane in filtration seeding* *n₃: Counts of Candida albicans*/ *Aspergillus brasiliensis in the validation of the residual effect of the support in pouring* *For the validation of the method, the counts have been compared between the results of: n₁ with N₁; n₂ with N₂; n₃ with N₁.* | | | | | | |

It can be asserted that the studies carried out demonstrated that the analysed smoke product exhibits bactericidal and fungicidal activity on the strains object of analysis for the veterinary sector after 8 hours of exposure, according to the established standard.

### Example 2: Method of airborne disinfection of surfaces according to the present invention, applying the smoke composition in a feed silo

In an empty feed silo with a surface area of 50 m³, a disinfection treatment according to the present invention was carried out with a monopersulfate smoke canister that contained an amount of powder matrix and monopersulfate mixture of 100 grams. The defined treatment ratio with respect to the environment to be treated was 2 g/m³. The smoke canister was placed in the centre of the silo on the ground, such that it was at a distance of 3.5 m from the walls thereof. The canister was ignited and a treatment consisting of 8 hours of exposure to the smoke began until the entire composition inside the canister was consumed.

Swabbing was performed for sampling in order to determine the presence of enterobacteria on the walls of the silo. To this end, the (previously sterilised) moist cotton swab is passed over the 20 cm² surface area of the silo, previously marked with a sterile template, slightly turning it. The unused portion of the swab is again passed perpendicular to the sampled surface. A second dry sterile swab is passed over the same surface. Each of the swabs is placed in a sterile tube with 4 ml of neutralising solution and is taken to a laboratory for analysis on the same day of sampling. The results showed that the dose was effective, since the bacteria count in the sample (1.22± 1.6 CFU/cm²) had been reduced by 5 log. The validation of the product and of its efficacy was performed by means of Standard AFNOR NF T 72-281:2014.

### Example 3: Method of airborne disinfection according to the present invention, applying the smoke composition in an industrial chicken hatchery unit

A disinfection treatment was carried out for a chicken hatchery unit measuring 2700 m³. To this end, 6 smoke canisters were used with a capacity of 1 Kg of product each. The planned treatment ratio was therefore 2 g/m³, since the total monopersulfate was 6 Kg among all the canisters. Treatment was carried out in the absence of animals and people. The smoke composition presented the same formulation as in Example 1.

The 6 canisters were equidistantly placed at 15, 45 and 75 metres in the longitudinal direction, respectively. In each of these segments, two 1 Kg smoke canisters were placed, spaced 3 metres from the side walls of the unit.

After cleaning and disinfection, samples of the environment were taken from different points of the units by means of agar contact plates and swabs for the count of aerobic microorganisms, *Enterococcus spp. and Escherichia coli,* as well as also for the detection of *E. coli* and *Salmonella.* A contact time of 6 hours for the plates was allowed, and they were subsequently taken to a laboratory for analysis. The average aerobic microorganisms determined by the swabs dropped 5.70 log after disinfection (1.45 ± 1.6 CFU/cm²). The unit was negative for the presence of Salmonella after 8 hours of applying the smoke after igniting the canister. The disinfection treatment was therefore effective.

## Claims

1. A smoke composition with biocidal activity, **characterised in that** it comprises:
- an active ingredient, being monopersulfate, in an amount by weight comprised between 10 %-30 % of the total weight of the smoke composition, with said active ingredient being included in
- a powder matrix comprising one or more stabilisers and excipients selected from the group consisting of: sulfamic acid, sodium dodecylbenzenesulfonate, sodium chloride and any combination thereof; wherein the active ingredient represents between 40 %-60 % of the total powder matrix and active ingredient mixture, and wherein said mixture represents between 20 %-50 % of the total weight of the smoke composition;
- an inert matrix, made up of one or more phyllosilicates, in a proportion by weight comprised between 25 %-50 % with respect to the total weight of the smoke composition, the at least one phyllosilicate being selected from the group consisting of: sepiolite, vermiculite, talc, attapulgite, biotite, moscovite, lepidolite, margarite, glauconite, chlorite and any combination thereof;
- a combustible material, being at least one polysaccharide, in a proportion by weight between 5 %-25 % with respect to the total weight of the smoke composition;
- an oxidising material, being potassium chlorate, in a proportion by weight between 5 %-20 % with respect to the total weight of the smoke composition; and
- colophony, in an amount comprised between 1 %-25 % of the total weight of the smoke composition.

2. The smoke composition according to claim 1, wherein the monopersulfate is selected from the group consisting of sodium monopersulfate, potassium monopersulfate and a mixture of both.

3. The smoke composition according to any one of claims 1 or 2, wherein the active ingredient and powder matrix mixture is present in an amount of 40 % of the total weight of the smoke composition, the amount of monopersulfate thus being 21.4 % by weight of the total smoke composition.

4. The smoke composition according to any one of the preceding claims, wherein:
- the phyllosilicate of the inert matrix is talc;
- the polysaccharide is present in a proportion by weight of 10 %-25 % of the total weight of the smoke composition, and is sucrose;
- the potassium chlorate is present in a proportion by weight of 5 %-20 % of the total weight of the smoke composition; and
- the colophony is present in a proportion by weight of 5 % to 15 % of the total weight of the smoke composition.

5. The smoke composition according to the preceding claim, wherein:
- the inert matrix is present in a proportion by weight of 28 % of the total weight of the smoke composition;
- the polysaccharide is present in a proportion by weight of 10-15 % of the total weight of the smoke composition;
- the potassium chlorate is present in a proportion by weight of 10-15 % of the total weight of the smoke composition;
- the colophony is present in a proportion by weight of 5 %-15 % of the total weight of the smoke composition.

6. The smoke composition according to any one of the preceding claims, wherein the powder matrix containing the active ingredient has the following formulation:
- monopersulfate, in a percentage of 53.3 % by weight of the total weight of the powder matrix and active ingredient mixture, which is equivalent to a monopersulfate weight of 21.5 % of the total weight of the smoke composition;
- sulfamic acid at 1 % by weight of the total weight of the powder matrix;
- sodium dodecylbenzenesulfonate, at 0.8 % by weight of the total weight of the powder matrix; and
- sodium chloride q.s. 100 %.

7. The smoke composition according to any one of the preceding claims, wherein it comprises
- the active ingredient and powder matrix mixture in an amount of 40 % of the total weight of the smoke composition, the amount of monopersulfate thus being 21.4 % by weight of the total smoke composition; where said powder matrix also comprises:
∘ sulfamic acid, at 1 % by weight of the total weight of the powder matrix;
∘ sodium dodecylbenzenesulfonate, at 0.8 % by weight of the total weight of the powder matrix; and
∘ sodium chloride q.s. 100 %;
- the inert matrix of the phyllosilicate in a proportion by weight of 28 % of the total weight of the smoke composition, said phyllosilicate being talc;
- the polysaccharide, being sugar, in a proportion by weight of 11 % of the total weight of the smoke composition;
- the potassium chlorate in a proportion by weight of 11 % of the total weight of the smoke composition; and
- colophony, in an amount of 10% by weight of the total weight of the composition.

8. A smoke canister (1) having biocidal action, consisting of:
- a pot (2) with lid (3), which has an opening (4) configured for letting out the smoke produced therein, and
- igniting means;
such that said pot (2) houses therein the smoke composition defined in any one of claims 1 to 7 as a biocide agent.

9. The smoke canister (1) according to the preceding claim, wherein the igniting means comprise a wick (5) protruding out of the canister (1) through the opening (4) located in the lid (3) in the upper part of the pot (2) and going through the interior to the bottom of same.

10. The smoke canister (1) according to the preceding claim, wherein the igniting means comprise a pyrotechnic component housed at the bottom of the pot (2) and in contact with the lower end of the wick (5), configured for acting as a source of energy and lighting the wick upon applying external heat to the bottom of the pot (2).

11. A non-therapeutic use of the smoke composition defined in any one of claims 1 to 7 or of the smoke canister (1) according to claims 8 to 10 as a disinfectant product.

12. The use according to the preceding claim, for disinfecting surroundings, environments and surfaces in the field of stock farming, agriculture, food and in the environmental area.

13. The use according to any one of claims 11 or 12, wherein the effective dose of the smoke composition is comprised between 1-3 g/m³.

14. A non-therapeutic method for disinfecting an environment or area by means of applying the smoke composition defined in any one of claims 1 to 7, which comprises:
- distributing one or more smoke canisters (1) in the environment or surface to be disinfected, and
- lighting the igniting means of the smoke canister or canisters (1) to cause the internal combustion of the composition and release the active ingredient as part of the smoke generated.

15. The method according to the preceding claim, wherein the igniting means of the smoke canister or canisters (1) consist of a wick (5) going through the interior of the pot (2) from its upper part, where it protrudes out through the opening (4) located in the lid (3) of the pot (2), to the bottom of same; and a pyrotechnic component, housed at the bottom of the pot (2) and in contact with the wick (5), configured for acting as a source of energy and lighting said wick (5);
such that said method comprises subjecting the exterior of the bottom of the pot (2) to heating for lighting the wick (5) in the interior by means of the pyrotechnic component, without generating a flame.

## Patentansprüche

1. Rauchzusammensetzung mit biozider Wirksamkeit, **dadurch gekennzeichnet, dass** sie aufweist:
- einen Wirkstoff, der Monopersulfat ist, in einer Menge von zwischen 10 - 30 Gew.-% des Gesamtgewichts der Rauchzusammensetzung, wobei der Wirkstoff enthalten ist in
- einer Pulvermatrix, die einen oder mehrere Stabilisatoren und Hilfsstoffe aufweist, die aus der Gruppe ausgewählt sind, bestehend aus: Sulfaminsäure, Natriumdodecylbenzolsulfonat, Natriumchlorid und jeglicher Kombination davon; wobei der Wirkstoff zwischen 40% und 60% des gesamten Pulvermatrix- und Wirkstoffgemisches ausmacht und wobei die Mischung zwischen 20% - 50% des Gesamtgewichts der Rauchzusammensetzung ausmacht;
- eine inerte Matrix, zusammengesetzt aus einem oder mehreren Schichtsilikaten, in einem Anteil zwischen 25 - 50 Gew.-% in Bezug auf das Gesamtgewicht der Rauchzusammensetzung, wobei das mindestens eine Schichtsilikat ausgewählt ist aus der Gruppe, bestehend aus: Sepiolith, Vermiculit, Talkum, Attapulgit, Biotit, Muskowit, Lepidolith, Margarit, Glauconit, Chlorit und jeglicher Kombination davon;
- ein brennbares Material, das mindestens ein Polysaccharid ist, in einem Anteil zwischen 5 - 25 Gew.-% in Bezug auf das Gesamtgewicht der Rauchzusammensetzung;
- ein oxidierendes Material, das Kaliumchlorat ist, in einem Anteil zwischen 5 - 20 Gew.-% in Bezug auf das Gesamtgewicht der Rauchzusammensetzung; und
- Kolophonium in einer Menge zwischen 1% - 25% des Gesamtgewichts der Rauchzusammensetzung.

2. Rauchzusammensetzung nach Anspruch 1, wobei das Monopersulfat ausgewählt ist aus der Gruppe, bestehend aus Natriummonopersulfat, Kaliummonopersulfat und einem Gemisch aus beiden.

3. Rauchzusammensetzung nach einem der Ansprüche 1 oder 2, wobei das Wirkstoff- und Pulvermatrixgemisch in einer Menge von 40% des Gesamtgewichts der Rauchzusammensetzung vorliegt, wobei die Menge an Monopersulfat somit 21,4 Gew.-% der gesamten Rauchzusammensetzung beträgt.

4. Rauchzusammensetzung nach einem der vorhergehenden Ansprüche, wobei:
- das Schichtsilikat der inerten Matrix Talkum ist;
- das Polysaccharid in einem Anteil von 10 - 25 Gew.-% des Gesamtgewichts der Rauchzusammensetzung vorliegt und Saccharose ist;
- das Kaliumchlorat in einem Anteil zwischen 5 - 20 Gew.-% des Gesamtgewichts der Rauchzusammensetzung vorliegt; und
- das Kolophonium in einem Anteil zwischen 5 - 15 Gew.-% des Gesamtgewichts der Rauchzusammensetzung vorliegt.

5. Rauchzusammensetzung nach dem vorhergehenden Anspruch, wobei:
- das Kaliumchlorat in einem Anteil von 18 Gew.-% des Gesamtgewichts der Rauchzusammensetzung vorliegt;
- das Polysaccharid in einem Anteil von 10 - 15 Gew.-% des Gesamtgewichts der Rauchzusammensetzung vorliegt;
- das Kaliumchlorat in einem Anteil von 10 - 15 Gew.-% des Gesamtgewichts der Rauchzusammensetzung vorliegt;
- das Kolophonium in einem Anteil zwischen von 5 - 15 Gew.-% des Gesamtgewichts der Rauchzusammensetzung vorliegt.

6. Rauchzusammensetzung nach einem der vorhergehenden Ansprüche, wobei die den Wirkstoff enthaltende Pulvermatrix die folgende Rezeptur aufweist:
- Monopersulfat in einem Gehalt von 53,3 Gew.-% des Gesamtgewichts des Pulvermatrix- und Wirkstoffgemisches, was einem Monopersulfatgewicht von 21,5 % des Gesamtgewichts der Rauchzusammensetzung entspricht;
- Sulfaminsäure mit 1 Gew.-% des Gesamtgewichts der Pulvermatrix;
- Natriumdodecylbenzolsulfonat mit 0,8 Gew.-% des Gesamtgewichts der Pulvermatrix; und
- Natriumchlorid q.s. 100 %.

7. Rauchzusammensetzung nach einem der vorhergehenden Ansprüche, wobei sie aufweist das Wirkstoff- und Pulvermatrixgemisch in einer Menge von 40% des Gesamtgewichts der Rauchzusammensetzung, wobei die Menge an Monopersulfat somit 21,4 Gew.-% der gesamten Rauchzusammensetzung beträgt; wobei die Pulvermatrix auch aufweist:
∘ Sulfaminsäure mit 1 Gew.-% des Gesamtgewichts der Pulvermatrix;
∘ Natriumdodecylbenzolsulfonat mit 0,8 Gew.-% des Gesamtgewichts der Pulvermatrix; und
∘ Natriumchlorid q.s. 100 %;
- die inerte Matrix des Schichtsilikats in einem Anteil von 28 Gew.-% des Gesamtgewichts der Rauchzusammensetzung, wobei das Schichtsilikat Talkum ist;
- das Polysaccharid, das Zucker ist, in einem Anteil von 11 Gew.-% des Gesamtgewichts der Rauchzusammensetzung;
- das Kaliumchlorat in einem Anteil von 11 Gew.-% des Gesamtgewichts der Rauchzusammensetzung; und
- Kolophonium in einer Menge von 10 Gew.-% des Gesamtgewichts der Zusammensetzung.

8. Rauchbehälter (1) mit biozider Wirksamkeit, bestehend aus:
- einem Topf (2) mit Deckel (3), der eine Öffnung (4) aufweist, die zum Herauslassen des darin produzierten Rauchs ausgelegt ist, und
- Zündmitteln;
so dass der Topf (2) die in einem der Ansprüche 1 bis 7 definierte Rauchzusammensetzung als ein Biozidstoff aufnimmt.

9. Rauchbehälter (1) nach dem vorhergehenden Anspruch, wobei die Zündmittel einen Docht (5) aufweisen, der durch die in dem Deckel (3) im oberen Teil des Topfs (2) gelegene Öffnung (4) aus dem Kanister (1) herausragt und durch das Innere zum Boden desselben verläuft.

10. Rauchbehälter (1) nach dem vorhergehenden Anspruch, wobei die Zündmittel eine am Boden des Topfs (2) aufgenommene und mit dem unteren Ende des Dochts (5) in Kontakt stehende pyrotechnische Komponente aufweisen, die ausgelegt ist, als eine Energiequelle zu fungieren und den Docht zu entzünden, wenn dem Boden des Topfs (2) externe Wärme zugeführt wird.

11. Nicht-therapeutische Verwendung der in einem der Ansprüche 1 bis 7 definierten Rauchzusammensetzung oder des Rauchbehälters (1) nach Ansprüchen 8 bis 10 als ein Desinfektionsprodukt.

12. Verwendung nach dem vorhergehenden Anspruch zum Desinfizieren von Umgebungen, Umfeldern und Oberflächen im Gebiet der Viehzucht, Landwirtschaft, Ernährung und im Umweltbereich.

13. Verwendung nach einem der Ansprüche 11 oder 12, wobei die wirksame Dosis der Rauchzusammensetzung zwischen 1-3 g/m3 liegt.

14. Nicht-therapeutisches Verfahren zum Desinfizieren einer Umgebung oder eines Bereichs mittels Anwenden der in einem der Ansprüche 1 bis 7 definierten Rauchzusammensetzung, das aufweist:
- Verteilen eines oder mehrerer Rauchbehälter (1) in oder auf der zu desinfizierenden Umgebung oder Fläche und
- Entzünden der Zündmittel des Rauchbehälters oder der Rauchbehälter (1), um die interne Verbrennung der Zusammensetzung auszulösen und den Wirkstoff als Teil des erzeugten Rauchs freizusetzen.

15. Verfahren nach dem vorhergehenden Anspruch, wobei die Zündmittel des Rauchbehälters oder der Rauchbehälter (1) aus einem Docht (5), der durch das Innere des Topfs (2) von dessen oberen Teil, wo er durch die in dem Deckel (3) des Topfs (2) gelegene Öffnung (4) herausragt, zum Boden desselben verläuft; und einer am Boden des Topfs (2) aufgenommenen und mit dem Docht (5) in Kontakt stehenden pyrotechnischen Komponente bestehen, die ausgelegt ist, als eine Energiequelle zu fungieren und den Docht (5) zu entzünden;
so dass das Verfahren aufweist, die Außenseite des Bodens des Topfs (2) einer Erwärmung zu unterziehen, um den Docht (5) im Inneren mittels der pyrotechnischen Komponente zu entzünden, ohne eine Flamme zu erzeugen.

## Revendications

1. Composition fumigène avec une activité biocide, **caractérisée en ce qu'**elle comprend :
- une matière active, qui est le monopersulfate, dans une quantité en poids comprise entre 10 % et 30 % du poids total de la composition fumigène, avec ladite matière active qui est incluse dans
- une matrice de poudre comprenant un ou plusieurs stabilisateurs et excipients choisis dans le groupe constitué de : acide sulfamique, dodécylbenzenesulfonate de sodium, chlorure de sodium et une combinaison quelconque de ceux-ci ; dans laquelle la matière active représente entre 40 % et 60 % du mélange total de matrice de poudre et de matière active, et dans laquelle ledit mélange représente entre 20 % et 50 % du poids total de la composition fumigène ;
- une matrice inerte, composée d'un ou plusieurs phyllosilicates, dans une proportion en poids comprise entre 25 % et 50 % par rapport au poids total de la composition fumigène, l'au moins un phyllosilicate étant choisi dans le groupe constitué de : sépiolite, vermiculite, talc, attapulgite, biotite, moscovite, lépidolite, margarite, glauconite, chlorite et une combinaison quelconque de ceux-ci ;
- une matière combustible, qui est au moins un polysaccharide, dans une proportion en poids entre 5 % et 25 % par rapport au poids total de la composition fumigène ;
- une matière oxydante, qui est du chlorate de potassium, dans une proportion en poids entre 5 % et 20 % par rapport au poids total de la composition fumigène ; et
- la colophane, dans une quantité comprise entre 1 % et 25 % du poids total de la composition fumigène.

2. Composition fumigène selon la revendication 1, dans laquelle le monopersulfate est choisi dans le groupe constitué de monopersulfate de sodium, monopersulfate de potassium et d'un mélange des deux.

3. Composition fumigène selon une quelconque des revendications 1 ou 2, dans laquelle le mélange de matière active et de matrice de poudre est présent dans une quantité de 40 % du poids total de la composition fumigène, la quantité de monopersulfate représentant ainsi 21,4 % en poids de la composition fumigène totale.

4. Composition fumigène selon une quelconque des revendications précédentes, dans laquelle :
- le phyllosilicate de la matrice inerte est du talc ;
- le polysaccharide est présent dans une proportion en poids de 10 % à 25 % du poids total de la composition fumigène, et est du saccharose ;
- le chlorate de potassium est présent dans une proportion en poids de 5 % à 20 % du poids total de la composition fumigène ; et
- la colophane est présente dans une proportion en poids de 5 % à 15 % du poids total de la composition fumigène.

5. Composition fumigène selon la revendication précédente, dans laquelle :
- la matrice inerte est présente dans une proportion en poids de 28 % du poids total de la composition fumigène ;
- le polysaccharide est présent dans une proportion en poids de 10 à 15 % du poids total de la composition fumigène ;
- le chlorate de potassium est présent dans une proportion en poids de 10 à 15 % du poids total de la composition fumigène ;
- la colophane est présente dans une proportion en poids de 5 % à 15 % du poids total de la composition fumigène.

6. Composition fumigène selon une quelconque des revendications précédentes, dans laquelle la matrice de poudre contenant la matière active a la formulation suivante :
- monopersulfate, en pourcentage de 53,3 % en poids du poids total du mélange de matrice de poudre et de matière active, qui est équivalent à un poids de monopersulfate de 21,5 % du poids total de la composition fumigène ;
- acide sulfamique à 1 % en poids du poids total de la matrice de poudre ;
- dodécylbenzenesulfonate de sodium, à 0,8 % en poids du poids total de la matrice de poudre ; et
- chlorure de sodium q.s. 100 %.

7. Composition fumigène selon une quelconque des revendications précédentes, dans laquelle elle comprend
- le mélange de matière active et de matrice de poudre dans une quantité de 40 % du poids total de la composition fumigène, la quantité de monopersulfate représentant ainsi 21,4 % en poids de la composition fumigène totale ; où ladite matrice de poudre comprend également :
∘ acide sulfamique, à 1 % en poids du poids total de la matrice de poudre ;
∘ dodécylbenzenesulfonate de sodium, à 0,8 % en poids du poids total de la matrice de poudre ; et
∘ chlorure de sodium q.s. 100 % ;
- la matrice inerte du phyllosilicate dans une proportion en poids de 28 % du poids total de la composition fumigène, ledit phyllosilicate étant du talc ;
- le polysaccharide, qui est du sucre, dans une proportion en poids de 11 % du poids total de la composition fumigène ;
- le chlorate de potassium dans une proportion en poids de 11 % du poids total de la composition fumigène ; et
- la colophone, dans une quantité de 10 % en poids du poids total de la composition.

8. Cartouche fumigène (1) ayant une action biocide, consistant en :
- un pot (2) avec couvercle (3), qui a une ouverture (4) configurée pour laisser sortir la fumée produite à l'intérieur, et
- un moyen inflammable ;
de telle sorte que ledit pot (2) loge à l'intérieur la composition fumigène définie selon une quelconque des revendications 1 à 7 en tant qu'agent biocide.

9. Cartouche fumigène (1) selon la revendication précédente, dans laquelle le moyen inflammable comprend une mèche (5) faisant saillie en dehors de la cartouche (1) à travers l'ouverture (4) située dans le couvercle (3) dans la partie supérieure du pot (2) et passant à travers l'intérieur jusqu'au fond de celui-ci.

10. Cartouche fumigène (1) selon la revendication précédente, dans laquelle le moyen inflammable comprend un composant pyrotechnique logé au fond du pot (2) et en contact avec l'extrémité inférieure de la mèche (5), configuré pour agir comme une source d'énergie et allumer la mèche lors de l'application d'une chaleur externe sur le fond du pot (2).

11. Utilisation non-thérapeutique de la composition fumigène définie selon une quelconque des revendications 1 à 7 ou de la cartouche fumigène (1) selon les revendications 8 à 10 en tant que produit désinfectant.

12. Utilisation selon la revendication précédente, destinée à désinfecter des milieux, des environnements et des surfaces dans le domaine de l'élevage, de l'agriculture, de l'alimentation et dans le domaine environnemental.

13. Utilisation selon une quelconque des revendications 11 ou 12, dans laquelle la dose efficace de la composition fumigène est comprise entre 1 et 3 g/m³.

14. Procédé non-thérapeutique destiné à désinfecter un environnement ou une zone au moyen d'une application de la composition fumigène définie selon une quelconque des revendications 1 à 7, lequel comprend :
- distribuer une ou plusieurs cartouches fumigènes (1) dans l'environnement ou la surface à désinfecter, et
- allumer le moyen inflammable de la cartouche ou des cartouches fumigène(s) (1) pour provoquer la combustion interne de la composition et libérer la matière active en tant que partie de la fumée générée.

15. Procédé selon la revendication précédente, dans lequel le moyen inflammable de la cartouche ou des cartouches fumigène(s) (1) consiste en une mèche (5) qui passe à travers l'intérieur du pot (2) depuis sa partie supérieure, où elle fait saillie à travers l'ouverture (4) située dans le couvercle (3) du pot (2), jusqu'au fond de celui-ci ; et un composant pyrotechnique, logé au fond du pot (2) et en contact avec la mèche (5), configuré pour agir comme une source d'énergie et allumer ladite mèche (5) ;
de telle sorte que ledit procédé comprend le fait de soumettre l'extérieur du fond du pot (2) à un chauffage pour allumer la mèche (5) à l'intérieur au moyen du composant pyrotechnique, sans générer de flamme.
